# FASCICULE DE BREVET EUROPEEN

(11) **EP 1 877 157 B1**
(45) Date de publication et mention de la délivrance du brevet: **06.08.2008**
(21) Numéro de dépôt: 06726219.6
(22) Date de dépôt: 06.03.2006
(51) Int. Cl.: B01D 39/20, B01J 35/04, B28B 1/00

(54) **DISPOSITIF, INSTALLATION ET PROCEDE D'ALIGNEMENT ET/OU D'ASSEMBLAGE D'ELEMENTS DE FILTRATION**
VORRICHTUNG, ANLAGE UND VERFAHREN ZUM AUSRICHTEN UND/ODER MONTIEREN VON FILTERELEMENTEN
DEVICE, INSTALLATION AND METHOD FOR ALIGNING AND/OR ASSEMBLING FILTERING ELEMENTS

(30) Priorité: 11.04.2005 DE 202005005782 U
(43) Date de publication de la demande: 16.01.2008
(73) Titulaire: Saint-Gobain Centre de Recherches et d'Etudes Européen, 92400 Courbevoie (FR); Saint-Gobain IndustrieKeramik Rödental GmbH, 96472 Rödental (DE)
(72) Inventeur: BARDON, Sébastien, F-75020 Paris (FR); BRIOT, Anthony, F-84450 Saint Saturnin Les Avignon (FR); DUBOTS, Dominique, F-74700 Salanches (FR)
(74) Mandataire: Lucas, Francois
(86) Numéro de dépôt international: PCT/FR2006/050195
(87) Numéro de publication internationale: WO 2006/108973

(56) Documents cités:
- EP-A- 1 468 801
- WO-A-20/04031101
- WO-A-20/04063122
- DE-A1- 3 132 666
- US-A- 3 582 301

## Description

L'invention se rapporte à un procédé, un dispositif ou une installation permettant l'assemblage et/ou la fabrication de filtres à particules comprenant plusieurs éléments monolithiques, convenant notamment pour une application dans une ligne d'échappement d'un moteur Diesel.

Les filtres à particules utilisés dans les lignes d'échappement des moteurs à combustion interne, plus particulièrement dans les véhicules automobiles du type diesel, présentent le plus souvent une structure en nid d'abeille. De telles structures comprennent un ensemble de conduits ou canaux adjacents d'axes parallèles entre eux séparés par des parois poreuses de filtration, lesquels conduits sont obturés à l'une ou l'autre de leurs extrémités pour délimiter des chambres d'entrée s'ouvrant suivant la face d'admission et des chambres de sortie s'ouvrant suivant la face d'évacuation. Les matériaux utilisés sont notamment de nature céramique, par exemple de la cordiérite, du carbure de silicium etc.

Pour résoudre les problèmes de tenue thermomécaniques liée aux phases de régénération inhérentes au fonctionnement d'un filtre à particules dans une ligne d'échappement et ainsi augmenter sa durée de vie, il a été proposé des structures de filtration associant plusieurs blocs ou éléments monolithiques en nid d'abeille. Les éléments sont le plus souvent assemblés entre eux par collage au moyen d'une colle ou d'un ciment de nature céramique, formant un joint entre chaque élément, appelé ciment de joint ou de jointoiement dans la suite de description. Des exemples de fabrication de telles structures filtrantes sont par exemple décrits dans le brevet EP 1 479 882 Al. Selon cet enseignement, les éléments parallélépipédiques, aussi appelés blocs monolithiques, sont collés, l'un après l'autre, en position horizontale dans le sens de leur longueur, sur un guide en forme de V et formé de deux supports plans, le plus souvent perpendiculaires. Les éléments assemblés sont ensuite séchés et usinés pour former la structure finale, dont la partie périphérique est le plus souvent entourée d'un ciment de revêtement pour assurer une bonne étanchéité en service. Ce procédé d'assemblage est cependant fastidieux car les éléments sont manipulés les uns après les autres. Ceci rend le procédé coûteux et peu productif. En outre, le temps de séchage, voire de durcissement, du ciment de joint déposé sur le premier élément est nécessairement plus long que celui du dernier élément assemblé, ce qui peut générer une inhomogénéité incontrôlée de structure qui est préjudiciable pour la durée de vie du filtre, voire pour sa simple manipulation.
Le but de la présente invention est de fournir un procédé d'alignement et/ou d'assemblage de tels éléments monolithiques, permettant notamment la fabrication en grand nombre de tels filtres avec une bonne productivité et un moindre coût. Un autre but de l'invention consiste en l'obtention de filtres assemblés au sein desquels le ciment de joint est réparti entre les éléments de manière contrôlée et homogène.

Plus précisément, la présente invention se rapporte selon un premier aspect à un dispositif d'alignement et/ou d'assemblage d'éléments de filtration, notamment d'un filtre à particules, ledit dispositif comprenant une plaque de fond sur laquelle sont posés lesdits éléments, ladite plaque de fond étant par exemple fixée sur une plaque de base, et des parois latéralement rabattables vers le haut par des moyens de rabattement, de telle manière que lesdits éléments soient maintenus entre eux de façon serrée lorsque lesdites parois sont en position haute.

Par exemple, les parois sont articulées sur la plaque de base au moyen de charnières disposées sur la périphérie de la plaque de base.

Selon un mode possible, lesdites parois latérales sont disposées de façon rabattable par l'intermédiaire d'un cadre de fermeture mobile en hauteur.

Chaque paroi peut être munie d'au moins une came de fermeture qui est en interaction avec un palier, disposé à l'opposé sur le cadre de fermeture.

Selon un mode avantageux, les parois peuvent être bloquées avec des boulons d'arrêt sur le cadre de fermeture par des éléments d'enclenchement qui sont disposés sur au moins deux parois opposées, dans lequel la plaque de base est disposée par fixation sur une palette et dans lequel le cadre de fermeture est actionnable au moyen d'éléments de levage d'un dispositif de levage à commande électronique.

Par exemple, le palier est un roulement à rouleaux.

Typiquement, les éléments de levage du dispositif de levage peuvent être des vérins hydrauliques ou pneumatiques ou des unités linéaires, constituées d'un rotor et d'un carter d'un moteur linéaire.

Selon un mode avantageux, une plaque d'adaptation est disposée sur chacune des faces intérieures des parois, lesdites plaques d'adaptation étant préférentiellement faites dans un matériau souple ou plastique ou liés aux parois amovibles par un système de ressorts ou de matériau souple.

L'invention se rapporte en outre à une installation pour l'assemblage d'un filtre à partir d'éléments de filtration, comprenant un dispositif tel que précédemment décrit et des moyens d'injection ou de dépose d'une colle ou d'un ciment entre les éléments présents au sein dudit dispositif.

Ladite installation peut en outre comprendre des moyens d'écartement et de basculement desdits éléments sur les parois.

Selon un mode avantageux, les moyens de rabattement des parois sont coordonnés ou asservis aux moyens d'injection ou de dépose.

Enfin, l'invention se rapporte à un procédé d'alignement et/ou d'assemblage d'éléments de filtration monolithiques, notamment en vue de la fabrication d'un filtre à particules, ledit procédé comprenant les étapes suivantes :
- une étape de positionnement desdits éléments dans un dispositif selon l'une des revendications précédentes,
- une étape d'alignement desdits éléments, sous l'action et le mouvement des parois latéralement rabattables par les moyens de rabattement, de telle manière que lesdits éléments soient maintenus entre eux de façon serrée lorsque lesdites parois sont en position haute.

Selon un premier mode, les parois externes des éléments amenées en contact les unes avec les autres par le mouvement des parois rabattables sont préalablement enduites d'une colle ou d'un ciment.

Selon un deuxième mode préféré du procédé, après l'étape de positionnement, une étape d'injection ou de dépose d'une colle ou d'un ciment de jointoiement entre lesdits éléments.

Dans un procédé d'assemblage typique selon l'invention, on effectue en succession les étapes suivantes :
- on positionne les différents éléments sur le support, en fonction de leur position respective dans l'assemblage final,
- on fixe les éléments dans une position et avec un écartement permettant l'injection du ciment ou de la colle,
- on injecte, entre les faces latérales des parois des éléments disposées en regard, la colle ou le ciment de jointoiement et on rapproche de manière asservie les éléments sous l'action des parois rabattables,
- on maintient lesdites parois rabattables en position haute, de manière à garder en pression les éléments les uns contre les autres, jusqu'au durcissement ou la prise de la colle ou du ciment,
- on démoule le filtre assemblé en diminuant la pression exercée par le retrait des parois rabattables.

Le procédé peut comprendre en outre une étape de traitement thermique du filtre avant l'étape de démoulage.

L'invention sera mieux comprise à la lecture d'un exemple de réalisation non limitatif d'un dispositif et d'une installation selon l'invention et du procédé de mise en oeuvre de ceux, illustré par les figures 1 à 3 parmi lesquelles :
- la figure 1 donne une représentation en trois dimensions du dispositif selon l'invention, en position fermé lorsqu'il contient les éléments de filtration,
- la figure 2 représente en trois dimensions du dispositif en position ouverte, avant la mise en place desdits éléments,
- la figure 3 illustre un mode particulier de réalisation du dispositif et de mise en oeuvre d'un tel dispositif au sein d'une installation d'assemblage d'un filtre, dans laquelle un ciment de jointoiement est en outre injecté entre les éléments.

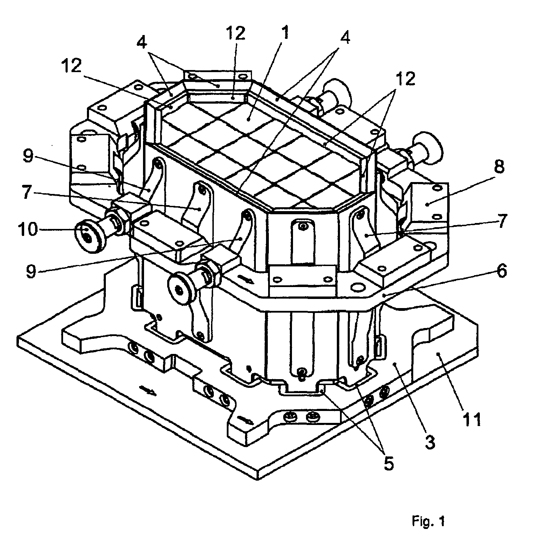

La figure 1 représente un dispositif d'alignement et/ou d'assemblage d'éléments de filtration 1 d'un filtre à particules, notamment d'un filtre diesel à particules. Les éléments de filtration 1 sont posés sur une plaque de fond 2 sous la forme d'un paquet. La plaque de fond 2 est fixée sur une plaque de base 3. Des parois 4 rabattables vers le haut sont articulées sur la plaque de base 3 au moyen de charnières 5, les parois 4 étant rabattables au moyen d'un cadre de fermeture 6 mobile vers le haut et vers le bas. Déplacées vers le haut, les parois 4 entourent les éléments de filtration 1 rassemblés en paquet et les maintiennent solidement entre eux. Si selon la représentation en figure 1, une fente s'est formée entre les éléments de filtration 1 et les parois 4, une plaque d'adaptation 12 fermant ladite fente et, lorsque les parois 4 sont rabattues vers le haut, maintenant de façon garantie les éléments de filtration 1 les uns contre les autres, est respectivement fixée sur les faces intérieures des parois 4. Pour obtenir un déplacement homogène et guidé lors de la fermeture et de l'ouverture des parois 4, ces dernières sont munies d'au moins une came de fermeture 7. Ces cames de fermetures 7 sont en interaction avec un palier 8, par exemple un roulement à rouleaux sur le cadre de fermeture 6. Pour être en mesure de bloquer le cadre de fermeture 6 dans sa position haute, dans laquelle il maintient le paquet d'éléments de filtration 1 qui est posé sur la plaque de fond 2, le cadre de fermeture 6 dispose de boulons d'arrêt 10 qui s'enclenchent dans des éléments d'enclenchement correspondants 9 sur les parois 4. La plaque de base 3 qui porte la plaque de fond 2 est fixée sur une palette 11. La palette 11 peut être la palette de transport d'un système de transport permettant d'amener les éléments de filtration 1 vers un processus de séchage, dans lequel le filtre à particule est créé sous la forme d'un paquet fixe constitué des éléments de filtration 1. Le cadre de fermeture 6 est actionné au moyen d'un dispositif de levage à commande électronique, qui n'est pas représenté dans le dessin. A cet effet, les éléments de levage du dispositif de levage sont reliés de façon adaptative au cadre de fermeture 6. Les éléments de levage du dispositif de levage peuvent être des vérins hydrauliques ou des vérins pneumatiques. Par ailleurs, ils peuvent être conçus sous la forme d'une unité linéaire, constituée d'un rotor et d'un carter d'un moteur linéaire.

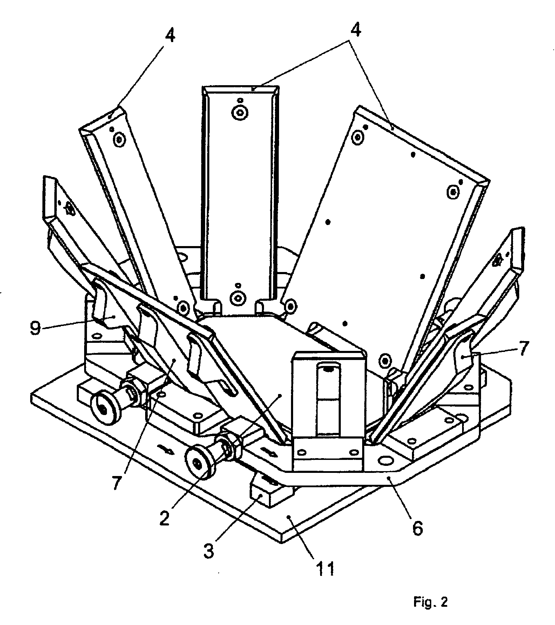

La figure 2 représente le dispositif ouvert, sans les plaques d'adaptation 12. Le cadre de fermeture 6 est déplacé dans la position inférieure par l'élément de levage du dispositif de levage, les parois 4 latéralement rabattues s'appliquant sur le cadre de fermeture 6 avec les cames de fermeture 7 sur les paliers 8. Dans cette position, on équipe la plaque de fond 2 avec les éléments de filtration 1 en un paquet mobile ou on retire le filtre à particules formé à partir du paquet, par processus de séchage. Ce dispositif présente l'avantage particulier que les efforts de fermeture et les vitesses de fermeture du cadre de fermeture 6 sont pilotables au moyen du dispositif de levage à commande électronique.

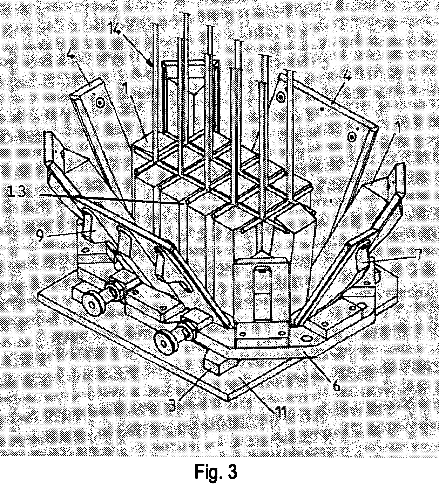

Un procédé d'assemblage d'un filtre à partir d'éléments monolithiques et d'un dispositif selon l'invention va maintenant être décrit, en relation avec la figure 3. L'installation comprend le dispositif précédemment décrit, en combinaison par exemple avec des moyens d'écartement (non représentés sur la figure 3) et des moyens d'injection (14) d'un ciment entre les éléments monolithiques 1 à assembler.

Le procédé de mise en oeuvre de l'installation comprend les étapes suivantes :

Dans un premier temps, les éléments sont placés dans le dispositif maintenu en position ouverte (cf. figure 2). Les éléments sont placés, de manière encore approximative, en fonction de leur position respective dans l'assemblage final. Le dispositif est dans un premier temps fermé, par déplacement du cadre de fermeture 6 et des parois 4 dans leur position supérieure (cf. figure 1), pour obtenir le meilleur positionnement des éléments les uns par rapport aux autres. Le dispositif est ensuite partiellement ouvert, les parois 4 formant typiquement un angle compris entre 20 et 50° avec la verticale. Un cadre métallique 14 comprenant des tubes creux verticaux et horizontaux pour le passage du ciment de jointoiement est positionné au dessus des éléments, tel qu'illustré sur la figure 3. Le cadre est adapté à la configuration et la disposition des éléments dans le dispositif. Les tubes creux horizontaux sont équipés dans leur partie inférieure de buses d'injection du ciment de jointoiement. Les éléments sont écartés par basculement vers les parois (4) par exemple au moyen d'un système de manutention pneumatique d'un type connu (non représenté sur la figure 3), comprenant par exemple des doigts de préhension sous une forme cylindrique, avec de préférence un embout par exemple à base de gomme de silicone ou tout autre moyen équivalent permettant de réduire l'abrasion des doigts et d'éviter une détérioration des éléments. La distance 13 ainsi obtenue entre les bords supérieurs des éléments 1 permet alors la descente du cadre 14 entre les éléments, tel que cela est illustré par la figure 3. Pour plus de clarté, l'écartement entre les parois latérales 4 a été exagéré sur la figure 3. Lorsque le cadre est dans sa position la plus basse, le ciment de jointoiement est injecté progressivement par les buses, de façon à remplir de bas en haut l'espace présent entre les éléments. Avantageusement, l'injection du ciment est coordonnée à un mouvement de remontée progressive du cadre 14 et de fermeture des cloisons 4. En particulier, la fermeture du dispositif d'assemblage est régulée par et asservie à la position du cadre d'injection. Une telle disposition permet au final l'obtention d'un filtre assemblé présentant une épaisseur de joint uniforme et homogène dans tout le volume du filtre. En outre l'utilisation du présent dispositif dans un procédé d'assemblage d'un filtre tel que précédemment décrit a aussi l'avantage de limiter la fréquence de nettoyage de l'équipement nécessaire, les bavures de ciment étant principalement concentrées entre et sur les faces supérieures des éléments.

Selon l'invention, si des bavures se forment lors de la fermeture de la boite en raison d'une fluidité accrue du ciment, celles-ci restent avantageusement concentrées sur la plaque support ou palette 11. En outre, le système de parois latérales rabattables disposés sur la palette 11, dissociés de l'installation d'injection ou de dépôt de ciment, de manutention pour écartement ou basculement des éléments et de celle de rabattement des parois, permet un nettoyage de la machine plus facile et plus rapide.

L'invention, telle qu'elle vient d'être décrite, peut bien évidemment donner lieu à de nombreuses variantes et/ou perfectionnements apparaissant de manière évidente à l'homme de l'art. De telles variantes doivent bien évidemment être entendues comme comprises dans l'étendue de la présente invention. Plus particulièrement, de telles variantes peuvent consister en l'une ou plusieurs des dispositions suivantes :
- le système de manutention , les éléments mécaniques du dispositif ou de l'installation, notamment ceux permettant l'écartement ou le rapprochement des éléments entre eux, en particulier les parois mobiles, sont adaptés à des éléments en céramique lorsque ceux-ci sont abrasifs comme le SiC par exemple. Par exemple, les plaques d'adaptation 12 visibles sur la figure 1 (mais non reportées sur les figures 2 et 3 pour des raisons de clarté) sont traitées en surface ou à base d'un matériau du type Téflon ou silicone ou aciers traités. Eventuellement les plaques d'adaptation 12 sont choisies souples ou plastiques pour amortir la chute des éléments céramiques et éviter leur fracture. Selon un autre mode les plaques 12 sont liées aux parois amovibles 4 par un système de ressorts ou de matériau souple pour améliorer encore la flexibilité du procédé, notamment vis-à-vis des possibles fluctuations dimensionnelles des éléments dans un même lot de fabrication ou d'un lot à un autre.
- Les tolérances dimensionnelles des éléments sont adaptées à la qualité du joint requis : dimensions de la section, perpendicularité de la face support par rapport à une face latérale ou des faces latérales entre elles, concavité ou convexité des faces latérales.
- La tenue mécanique de l'élément avant assemblage est choisie et adaptée d'une part à la pression exercée par le dispositif de rapprochement et d'autre part à la contre-pression exercée par le ciment de jointoiement. Un tel choix peut notamment être fonction de l'épaisseur de paroi de l'élément, de sa géométrie et de sa porosité.
- La granulométrie et la rhéologie du ciment de jointoiement permettant l'assemblage sont adaptées selon les techniques de l'art au mode de mise en oeuvre choisi et aux caractéristiques dimensionnelles du joint requis. En particulier le ciment ou la colle présente une plasticité adaptée lui permettant de subir une compression lors de la mise en forme. Dans le cas d'une mise en oeuvre par injection tel qu'illustré par la figure 3, le ciment doit présenter des propriétés rhéologiques permettant son injection sans difficultés excessives, un temps de séchage et/ou de durcissement adapté afin d'éviter une prise trop rapide ou un bouchage des buses d'injection par exemple, et de préférence un comportement de préférence rhéofluidifiant afin de ne pas boucher les buses d'injection.
- Le dispositif selon l'invention, présente dans sa position fermée une forme et un volume intérieurs proches de la forme et du volume du filtre assemblé finalement obtenu, en tenant compte de la dimension des joints entre les éléments.
- Un dispositif selon un mode préféré de l'invention est par exemple constitué d'un cadre extérieur qui remonte et dont on peut régler la vitesse, en association avec des cames de fermeture de manière à obtenir un déplacement homogène et guidé des parois. Le cadre de fermeture dispose par exemple de boulons de réglage d'arrêt permettant de contrôler la pression exercée sur les éléments afin de ne pas les casser.
- Le dispositif est fermée à un niveau qui ne correspond pas à la hauteur maximale du cadre de fermeture mais à une fraction de celle-ci, typiquement environ 90%, de telle manière que les éléments puissent encore glisser entre eux et se repositionner à même hauteur sur la plaque de fond. Le repositionnement en hauteur des éléments permet ainsi d'obtenir une bonne planéité améliorée du filtre assemblé.
- Une plaque, de poids et de forme ajustés, est disposée et vient s'appuyer sur l'ensemble des éléments après retrait du cadre d'injection. Cette variante améliore encore le contrôle de la planéité des faces d'entrée et sortie du filtre.
- La prise ou le durcissement de la colle ou du ciment avant démoulage du filtre assemblé peuvent être réalisés à froid par ajout d'un ou de plusieurs accélérateurs de prise dans le ciment ou par apport de rayonnement IR ou UV, de micro-ondes, ou par tout autre moyen connu permettant d'apporter de la chaleur.
- selon un mode possible de réalisation, permettant de minimiser encore les risques de bouchage de certains canaux à cause du débordement possible du ciment de jointoiement, il est possible selon l'invention d'apposer des masques avant l'opération d'assemblage.
- Selon l'invention, les canaux s'ouvrant à chaque extrémité des éléments sont préalablement alternativement bouchés avant l'assemblage, sur le modèle décrit par exemple dans les demandes EP 1508416 ou EP 1516658 mais optionnellement, ils peuvent également ne pas être bouchés.
- Les éléments peuvent comporter, mais non obligatoirement, un espaceur permettant de contrôler l'épaisseur de joint.
- Les éléments peuvent avoir été préparés de manière à présenter des zones d'adhérence différentes, tel que décrit par exemple dans les demandes FR 2853256 ou EP 1591431.
- les éléments peuvent prendre toutes les formes possibles pour l'assemblage. Ils peuvent par exemple présenter une section carrée ou rectangulaire, triangulaire, hexagonale, etc. ou un mélange de ces formes.
- Selon une variante de l'invention, un ciment autocoulable est employé comme ciment de jointoiement. Dans ce cas, la quantité nécessaire de ciment n'est pas injecté mais est simplement déposée par des moyens appropriés par simple gravité, c'est-à-dire uniquement sous l'effet de son propre poids, entre les éléments. Par ciment autocoulable, il est entendu au sens de la présente description les mortiers réfractaires du type autocoulables, dits « self-flow » en anglais selon la terminologie définie par la norme ASTM C71 « Standard terminology relating to refractories ». Typiquement, ce sont des mélanges humides qui peuvent être mis en oeuvre sans vibration ni apport d'énergie extérieur, sans provoquer de ségrégation.

### Liste des repères

- 1: Eléments de filtration
- 2: Plaque de fond
- 3: Plaque de base
- 4: Parois
- 5: Charnières
- 6: Cadre de fermeture
- 7: Cames de fermeture
- 8: Palier
- 9: Eléments d'enclenchement
- 10: Boulon d'arrêt
- 11: Palette
- 12: Plaque d'adaptation
- 13: Distance entre les bords supérieurs des éléments
- 14: Cadre d'injection

## Revendications

1. Dispositif d'alignement et/ou d'assemblage d'éléments de filtration (1), notamment d'un filtre à particules, ledit dispositif comprenant une plaque de fond (2) sur laquelle sont posés lesdits éléments, ladite plaque de fond étant par exemple fixée sur une plaque de base (3), et des parois (4) latéralement rabattables vers le haut par des moyens de rabattement (6, 7, 8), de telle manière que lesdits éléments soient maintenus entre eux de façon serrée lorsque lesdites parois sont en position haute.

2. Dispositif selon la revendication 1, dans lequel les parois sont articulées sur la plaque de base au moyen de charnières (5) disposées sur la périphérie de la plaque de base (3).

3. Dispositif selon l'une des revendications 1 ou 2, dans lequel lesdites parois latérales (4) sont disposées de façon rabattable par l'intermédiaire d'un cadre de fermeture (6) mobile en hauteur.

4. Dispositif selon la revendication 3, dans lequel chaque paroi (4) est munie d'au moins une came de fermeture (7) qui est en interaction avec un palier (8), disposé à l'opposé sur le cadre de fermeture (6).

5. Dispositif selon la revendication 4, dans lequel les parois (4) sont bloquées avec des boulons d'arrêt (10) sur le cadre de fermeture (6) par des éléments d'enclenchement (9) qui sont disposés sur au moins deux parois opposées (4), dans lequel la plaque de base (3) est disposée par fixation sur une palette (11) et dans lequel le cadre de fermeture (6) est actionnable au moyen d'éléments de levage d'un dispositif de levage à commande électronique.

6. Dispositif selon la revendication 4 ou 5 , dans lequel le palier (8) est un roulement à rouleaux.

7. Dispositif l'une des revendications 4-6, dans lequel les éléments de levage du dispositif de levage sont des vérins hydrauliques ou pneumatiques ou des unités linéaires, constituées d'un rotor et d'un carter d'un moteur linéaire.

8. Dispositif selon l'une des revendications précédentes, dans lequel une plaque d'adaptation (12) est disposée sur chacune des faces intérieures des parois (4), lesdites plaques d'adaptation étant préférentiellement faites dans un matériau souple ou plastique ou liés aux parois amovibles (4) par un système de ressorts ou de matériau souple.

9. Installation pour l'assemblage d'un filtre à partir d'éléments de filtration, comprenant un dispositif selon l'une des revendications précédentes et des moyens d'injection (14) ou de dépose d'une colle ou d'un ciment entre les éléments présents au sein dudit dispositif.

10. Installation selon la revendication 9, comprenant en outre des moyens d'écartement et de basculement desdits éléments sur les parois (4).

11. Installation selon la revendication 9 ou 10, dans lequel les moyens de rabattement des parois sont coordonnés ou asservis aux moyens d'injection (14) ou de dépose.

12. Procédé d'alignement et/ou d'assemblage d'éléments de filtration monolithiques, notamment en vue de la fabrication d'un filtre à particules, ledit procédé étant **caractérisé en ce qu'**il comprend les étapes suivantes :
- une étape de positionnement desdits éléments dans un dispositif selon l'une des revendications précédentes,
- une étape d'alignement desdits éléments, sous l'action et le mouvement des parois latéralement rabattables par les moyens de rabattement, de telle manière que lesdits éléments soient maintenus entre eux de façon serrée lorsque lesdites parois sont en position haute.

13. Procédé d'assemblage selon la revendication 12, dans lequel les parois externes des éléments amenées en contact les unes avec les autres par le mouvement des parois rabattables sont préalablement enduites d'une colle ou d'un ciment.

14. Procédé d'assemblage selon la revendication 12, comprenant en outre, après l'étape de positionnement, une étape d'injection ou de dépose d'une colle ou d'un ciment de jointoiement entre lesdits éléments.

15. Procédé d'assemblage selon la revendication 14, dans lequel on effectue en succession les étapes suivantes :
- on positionne les différents éléments sur le support, en fonction de leur position respective dans l'assemblage final,
- on fixe les éléments dans une position et avec un écartement permettant l'injection du ciment ou de la colle,
- on injecte, entre les faces latérales des parois des éléments disposées en regard, la colle ou le ciment de jointoiement et on rapproche de manière asservie les éléments sous l'action des parois rabattables,
- on maintient lesdites parois rabattables en position haute, de manière à garder en pression les éléments les uns contre les autres, jusqu'au durcissement ou la prise de la colle ou du ciment,
- on démoule le filtre assemblé en diminuant la pression exercée par le retrait des parois rabattables.

16. Procédé d'assemblage selon la revendication 15, comprenant en outre une étape de traitement thermique du filtre avant l'étape de démoulage.

## Claims

1. A device for aligning and/or assembling filtering elements (1), particularly of a particulate filter, said device comprising a bottom plate (2) on which said elements are placed, said bottom plate being, for example, fixed to a base plate (3), and walls (4) that can be folded laterally upwards by folding means (6, 7, 8) in such a way that said elements are held tightly together when said walls are in the folded-up position.

2. The device as claimed in claim 1, in which the walls are articulated to the base plate by means of hinges (5) positioned around the periphery of the base plate (3).

3. The device as claimed in one of claims 1 or 2, in which said lateral walls (4) are arranged in such a way that they can be folded using a closure frame (6) that can move in the heightwise direction.

4. The device as claimed in claim 3, in which each wall (4) is equipped with at least one closure cam (7) which interacts with a bearing (8), positioned opposite it on the closure frame (6).

5. The device as claimed in claim 4, in which the walls (4) are locked in position with retaining bolts (10) on the closure frame (6), using engaging elements (9) which are positioned on at least two opposite walls (4), in which the base plate (3) is arranged by fixing it to a pallet (11) and in which the closure frame (6) can be actuated using lifting elements of an electronically controlled lifting device.

6. The device as claimed in one of claims 4 or 5, in which the bearing (8) is a roller bearing.

7. The device as claimed in one of claims 4 to 6, in which the lifting elements of the lifting device are hydraulic or pneumatic actuators or linear units consisting of a rotor and of a casing of a linear motor.

8. The device as claimed in one of the preceding claims, in which an adapter plate (12) is positioned on each of the interior faces of the walls (4), said adapter plates preferably being made of a flexible or plastic material or connected to the removable walls (4) by a system of springs or flexible material.

9. An installation for assembling a filter from filtering elements, comprising a device as claimed in one of the preceding claims and means (14) for injecting or depositing an adhesive or a cement between the elements present within said device.

10. The installation as claimed in claim 9, further comprising means for parting said elements and rocking them onto the walls (4).

11. The installation as claimed in claim 9 or 10, in which the wall-folding means are coordinated with or slaved to the injection or depositing means (14).

12. A method of aligning and/or assembling monolithic filtering elements, particularly with a view to manufacturing a particulate filter, said method being **characterized in that** it comprises the following steps:
- a step of positioning said elements in a device as claimed in one of the preceding claims,
- a step of aligning said elements, under the action and movement of walls that can be folded laterally by the folding means, in such a way that said elements are held tightly together when said walls are in the folded-up position.

13. The assembly method as claimed in claim 12, in which those external walls of the elements that have been brought into contact with one another by the movement of the folding walls are precoated with an adhesive or with a cement.

14. The assembly method as claimed in claim 12, further comprising, after the positioning step, a step of injecting or depositing a jointing cement or adhesive between said elements.

15. The assembly method as claimed in claim 14, in which the following steps are performed in turn:
- the various elements are positioned on the support according to their respective positions in the finished assembly,
- the elements are fixed in a position and with a spacing that will allow the cement or the adhesive to be injected,
- the jointing cement or adhesive is injected between the lateral faces of the walls of the elements that have been positioned facing each other and the elements are moved closer together in a slaved fashion under the action of the folding walls,
- said folding walls are kept in the folded-up position so as to keep the elements pressed together until the adhesive or the cement has cured or set,
- the assembled filter is demolded by reducing the pressure exerted by removing the folding walls.

16. The assembly method as claimed in claim 15, further comprising a step of heat treating the filter prior to the demolding step.

## Patentansprüche

1. Vorrichtung zum Ausrichten und/oder Zusammenbauen von Filterelementen (1), insbesondere eines Partikelfilters, die eine Bodenplatte (2), auf welcher diese Elemente angeordnet sind und welche beispielsweise auf einer Grundplatte (3) befestigt ist, und Wände (4) umfasst, die durch Klappmittel (6, 7, 9) derart nach oben seitlich zurückklappbar sind, dass diese Elemente untereinander festgespannt gehalten werden, wenn sich diese Wände in aufrechter Position befinden.

2. Vorrichtung nach Anspruch 1, bei welcher die Wände auf der Grundplatte mittels Scharnieren (5), die am Umfang der Grundplatte (3) angeordnet sind, gelenkig sind.

3. Vorrichtung nach Anspruch 1 oder 2, bei welcher die Seitenwände (4) über einen höhenbeweglichen Schließrahmen (6) zurückklappbar angeordnet sind.

4. Vorrichtung nach Anspruch 3, bei welcher jede Wand (4) mit mindestens einer Schließnocke (7) versehen ist, die mit einem Lager (8) wechselwirkt, das ihr gegenüber auf dem Schließrahmen (6) angeordnet ist.

5. Vorrichtung nach Anspruch 4, bei welcher die Wände (4) mit Haltebolzen (10) am Schließrahmen (6) durch Rastelemente (9) blockiert werden, die auf wenigstens zwei einander gegenüber liegenden Wänden (4) angeordnet sind, bei welcher die Grundplatte (3) durch Befestigung auf einer Plattform (11) angeordnet ist und bei welcher sich der Schließrahmen (6) mittels Hebeelementen einer elektronisch gesteuerten Hebeeinrichtung betätigen lässt.

6. Vorrichtung nach Anspruch 4 oder 5, bei welcher das Lager (8) ein Rollenlager ist.

7. Vorrichtung nach einem der Ansprüche 4 bis 6, bei welcher die Hebeelemente der Hebeeinrichtung Hydraulik- bzw. Pneumatikzylinder oder lineare Einheiten, die aus einem Rotor und einem Gehäuse mit einem Linearmotor gebildet sind, sind.

8. Vorrichtung nach einem der vorhergehenden Ansprüche, bei welcher eine Adaptionsplatte (12) auf jeder Innenseite der Wände (4) angeordnet ist, wobei diese Adaptionsplatten vorzugsweise aus einem flexiblen oder plastischen Material hergestellt oder mit den lösbaren Wänden (4) durch ein System aus Federn oder einem nachgiebigen Material verbunden sind.

9. Anlage für den Zusammenbau eines Filters aus Filterelementen, die eine Vorrichtung nach einem der vorhergehenden Ansprüche und Mittel (14) zum Einspritzen oder Aufbringen eines Klebstoffs oder Zements zwischen die in dieser Vorrichtung vorhandenen Elemente umfasst.

10. Anlage nach Anspruch 9, die außerdem Mittel zum Beabstanden und Kippen der Elemente an den Wänden (4) umfasst.

11. Anlage nach Anspruch 9 oder 10, bei welcher die Mittel zum Zurückklappen der Wände mit den Mitteln (14) zum Einspritzen oder Aufbringen koordiniert oder geregelt werden.

12. Verfahren zum Ausrichten und/oder Zusammenbauen monolithischer Filterelemente, insbesondere, um einen Partikelfilter herzustellen, **dadurch gekennzeichnet, dass** es folgende Stufen umfasst:
- eine Stufe der Positionierung dieser Elemente in einer Vorrichtung nach einem der vorhergehenden Ansprüche und
- eine Stufe der Ausrichtung dieser Elemente unter derartiger Einwirkung und Bewegung der durch die Klappmittel seitlich zurückklappbaren Wände, dass diese Elemente untereinander festgespannt gehalten werden, wenn sich diese Wände in aufrechter Position befinden.

13. Montageverfahren nach Anspruch 12, bei welchem die Außenwände der Elemente, die durch die Bewegung der zurückklappbaren Wände miteinander in Berührung gekommen sind, zuvor mit einem Klebstoff oder Zement beschichtet wurden.

14. Montageverfahren nach Anspruch 12, das außerdem nach der Positionierungsstufe eine Stufe des Einspritzens oder Aufbringens eines Verbindungsklebstoffs oder -zements zwischen die Elemente umfasst.

15. Montageverfahren nach Anspruch 14, bei welchem nacheinander folgende Stufen durchgeführt werden:
- Anordnen der verschiedenen Elemente in Abhängigkeit von ihrer jeweiligen Position im fertigen Zusammenbau auf dem Träger,
- Befestigen der Elemente in einer Position und mit einem Abstand, die das Einspritzen des Zements oder Klebstoffs erlauben,
- Einspritzen des Verbindungsklebstoffs oder -zements zwischen die Seitenflächen der Wände der einander zugewandt angeordneten Elemente und gesteuertes Annähern der Elemente unter der Einwirkung der zurückklappbaren Wände,
- Halten dieser zurückklappbaren Wände in aufrechter Position, sodass die Elemente bis zum Aushärten oder Abbinden des Klebstoffs oder Zements gegeneinander unter Druck gehalten werden, und
- Entnehmen des zusammengebauten Filters, indem der ausgeübte Druck durch den Rückzug der zurückklappbaren Wände verringert wird.

16. Montageverfahren nach Anspruch 15, das außerdem vor der Entnahmestufe eine Stufe zur Wärmebehandlung des Filters umfasst.
